(19) Europäisches Patentamt
European Patent Office
Office européen des brevets

(11) **EP 3 365 570 B1**

(12) **EUROPÄISCHE PATENTSCHRIFT**

(45) Veröffentlichungstag und Bekanntmachung des Hinweises auf die Patenterteilung:
**17.07.2019 Patentblatt 2019/29**

(21) Anmeldenummer: **16775614.7**

(22) Anmeldetag: **26.09.2016**

(51) Int Cl.:
*F16C 11/06* (2006.01)     *F16C 41/00* (2006.01)

(86) Internationale Anmeldenummer:
**PCT/EP2016/072796**

(87) Internationale Veröffentlichungsnummer:
**WO 2017/067745 (27.04.2017 Gazette 2017/17)**

(54) **KUGELGELENK FÜR EIN FAHRZEUG MIT KIPPWINKELMESSEINRICHTUNG**

BALL JOINT FOR A VEHICLE WITH TILT ANGLE MEASURING DEVICE

JOINT SPHÉRIQUE POUR VÉHICULE AVEC DISPOSITIF DE DÉTECTION DE L'ANGLE D'INCLINAISON DU JOINT SPHÉRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.10.2015 DE 102015220756**

(43) Veröffentlichungstag der Anmeldung:
**29.08.2018 Patentblatt 2018/35**

(73) Patentinhaber: **ZF Friedrichshafen AG 88046 Friedrichshafen (DE)**

(72) Erfinder:
• **KLANK, Michael**
  **49084 Osnabrück (DE)**
• **HASKAMP, Klaus**
  **49413 Dinklage (DE)**

(56) Entgegenhaltungen:
**DE-A1- 10 134 259     DE-A1- 10 339 126**
**DE-A1-102008 041 050     DE-A1-102010 052 885**

## Beschreibung

Die Erfindung betrifft ein Kugelgelenk für ein Fahrzeug, mit einem Gehäuse und einem sich in einer axialen Richtung erstreckenden und eine Gelenkkugel umfassenden Kugelzapfen, der mit seiner Gelenkkugel schwenkbeweglich in dem Gehäuse gelagert ist und sich durch eine Öffnung des Gehäuses hinaus erstreckt, und zumindest einem Sensor, der dazu dient, einen Kippwinkel zwischen dem Kugelzapfen und dem Gehäuse zu erfassen.

Kugelgelenke dieser Art sind aus dem Stand der Technik bekannt. Beispielsweise beschreibt die deutsche Offenlegungsschrift DE10350640 B4 ein Kugelgelenk für ein Kraftfahrzeug mit einem eine Ausnehmung aufweisenden Gehäuse, einem einen Zapfen und eine Gelenkkugel aufweisenden Kugelzapfen, der mit seiner Gelenkkugel drehbar und schwenkbar in der Ausnehmung des Gehäuses gelagert ist. Der Zapfen erstreckt sich durch eine in dem Gehäuse vorgesehene Öffnung, und ein Dichtungsbalg ist vorgesehen, der zwischen dem Gehäuse und dem Zapfen angeordnet ist. Weiterhin ist eine mehrteilige Messanordnung offenbart, welche wenigstens einen Signalgeber und wenigstens einen Sensor aufweist, wobei die Messanordnung zwischen dem Gehäuse, im Bereich des zapfenseitigen Endes der Gelenckugel und dem zapfenseitigen Ende des Dichtungsbalgs angeordnet ist.

Weiterhin wird in der deutschen Offenlegungsschrift DE102010052885 A1 ein Lastenträger bzw. Fahrradträger für ein Kraftfahrzeug offenbart, wobei der Lastenträger eine Befestigungseinrichtung mit klemmenden Komponenten aufweist, wobei die klemmenden Komponenten durch die Wirkung eines Halteantriebs, eines Kugelkopfs einer Anhängerkupplung, in einem Gehäuse zum Aufnehmen der Kugelkopf festklemmen, wobei das Gehäuse relativ zum Kugelkopf schwenkbar ist. Das Gehäuse weist weiterhin zwei Sensoren auf, die den Abstand zum Kugelkopf ermitteln. Wenn die beiden Sensoren denselben Abstand zum Kugelkopf ermitteln, wird die Halteantrieb eingeschaltet, um ein bestimmtes Ausrichten des Gehäuses in Bezug auf den Kugelkopf sicherzustellen. Dazu sind die Sensoren an der Oberwand des Gehäuses angeordnet und messen einen Abstand zu einer Abflachung des Kugelkopfs.

In der deutschen Offenlegungsschrift DE102010030246 A1 ist ein Kugelgelenk für ein Fahrzeug offenbart, das ein Gehäuse und einen Kugelzapfen aufweist. Eine Winkelmesseinrichtung mit feldbereitstellender Komponente wird beschrieben, mittels welcher eine Bewegung des Kugelzapfens relativ zu dem Gehäuse erfassbar ist, wobei die feldbereitstellenden Komponenten gegenüber einer Gelenkkugel des Kugelzapfens angeordnet sind. Die Gelenkkugel weist einen Oberflächenbereich auf, der von der Kugeloberfläche der Gelenkkugel abweicht. Dieser Oberflächenbereich steht mit dem magnetischen Feld der feldbereitstellenden Komponenten in Wechselwirkung.

Aus der DE 10 2008 041 050 A1 ist eine Winkelmesseinrichtung bekannt, bei der ein Magnet in einer Gelenkkugel und gegenüberliegend zu diesem ein magnetfeldempfindlicher Sensor vorgesehen ist. Mittels des Sensors wird die Magnetfeldgröße erfasst. Die Messungen der Magnetfeldgröße können auch als Abstandsmessung interpretiert werden.

Der DE 103 39 126 A1 ist ebenfalls ein Kugelgelenk mit einem Winkelsensor zu entnehmen, wobei in einer Gelenkkugel ein Magnet und in einem Gelenkgehäuse Magnetfeldrichtungssensoren angeordnet sind.

Nachteilig an den in dem Stand der Technik beschriebenen Lösungen ist unter anderem, dass ein hoher Bearbeitungsaufwand bei der Herstellung der Gelenkkugel notwendig ist. Weiterhin verwenden herkömmliche Messeinrichtungen für Kugelgelenke häufig eine magnetisch basierte Sensorik, die empfindlich gegenüber Störungen von externen magnetischen Feldern sind.

Es ist eine Aufgabe der Erfindung ein robustes Kugelgelenk vorzuschlagen, das kostengünstig herzustellen ist, sowie die Erfassung der Kippwinkel zwischen dem Gehäuse und des Kugelzapfens auf einfacher Weise ermöglicht.

Die Aufgabe wird durch ein Kugelgelenk gemäß Patentanspruch 1 gelöst. Vorteilhafte Ausgestaltungen der Erfindung sind Gegenstand der Unteransprüche.

Somit wird die Aufgabe gelöst mit einem Kugelgelenk für ein Fahrzeug, umfassend ein Gehäuse und einen sich in einer axialen Richtung erstreckenden und eine Gelenkkugel umfassenden Kugelzapfen, der mit seiner Gelenkkugel schwenkbeweglich in dem Gehäuse gelagert ist und sich durch eine Öffnung des Gehäuses hinaus erstreckt und zumindest einem Sensor, der dazu dient, einen Kippwinkel zwischen dem Kugelzapfen und dem Gehäuse zu erfassen, wobei die Gelenkkugel einen abgeflachten Bereich aufweist, wobei der zumindest eine Sensor ein Entfernungssensor ist, der an einer Wandung des Gehäuses angeordnet ist und dem abgeflachten Bereich der Gelenkkugel gegenüberliegt, und wobei der zumindest eine Sensor so ausgerichtet ist, dass der Sensor mit einer vorgegebenen Messrichtung eine Entfernung gegenüber dem abgeflachten Bereich erfasst, um daraus auf den Kippwinkel zu schließen, wobei die Messrichtung so gestaltet ist, dass eine injektive Abbildung zwischen dem Kippwinkel und der zu erfassenden Entfernung entsteht. Der Sensor kann an der Oberfläche an der inneren Seite der Gehäusewandung mittels fachüblichen Befestigungsverfahren montiert werden, beispielsweise mittels Kleben und/oder Schrauben. Der zumindest eine Sensor kann aber auch in der Gehäusewandung eingesetzt werden. Dafür kann beispielsweise eine Öffnung, ein Sackloch oder eine Durchbohrung vorgesehen werden. Es ist weiterhin möglich, dass die Wandung des Gehäuses vorgefertigt wird und dass der Sensor als Bestandteil der vorgefertigten Wandung integriert wird. Somit ist es möglich den Sensor in der Gehäusewandung zu positionieren und anschließend zu vergießen bzw. umspritzen. Unter dem Ausdruck abgeflachter Bereich sei im Rahmen dieser Erfindung ein Oberflächenabschnitt der Gelenkkugel zu verstehen, der ganz allgemein eine gegenüber der Kugelkrümmung verringerte Krümmung (im Sinne einer Abflachung) aufweist. Die Krümmung des abgeflachten Bereichs kann in einem bevorzugten Fall null betragen, so dass dieser eine gerade Ebene bildet. Der abgeflachte Bereich der Gelenkkugel lässt sich im Gegensatz zu den verarbeiteten Oberflächen, wie im Stand der Technik beschrieben, leicht herstellen. Die Verwendung eines Entfernungssensors ermöglicht weiterhin eine Unempfindlichkeit gegenüber magnetischen Störungen, denn magnetische Felder haben keinen Einfluss auf die Funktionstüchtigkeit des Entfernungssensors.

Der Sensor ist so ausgerichtet, dass sich eine Eindeutigkeit bzw. ein injektiver Zusammenhang zwischen der Entfernung und dem Kippwinkel erzielen lässt. Dies kann erfolgen indem der Sensor selbst eine verkippte Stellung in Bezug auf dem Gehäuse aufweist, und/oder indem der abgeflachte Bereich in Bezug auf die axiale Richtung des Kugelzapfens schräg ausgestaltet ist.

Der Kugelzapfen kann sich in Bezug auf das Gehäuse in einem vorgegebenen Bewegungsbereich bewegen. Beispielsweise kann der Kugelzapfen um 40 Grad in Bezug auf das Gehäuse schwanken. In Zusammenhang mit der Erfindung bezeichnet ein Kippwinkel, der Null Grad beträgt, den Zustand, wenn sich der Kugelzapfen in der Mitte seines Bewegungsbereichs befindet. Somit kann der Kugelzapfen beispielsweise zwischen + 20 Grad und - 20 Grad schwanken.

In einer Ausgestaltung des Kugelgelenks handelt es sich bei der injektiven Abbildung um eine lineare funktionale Beziehung. Der Entfernungssensor erfasst die Entfernung zwischen dem Sensor und dem abgeflachten Bereich. Wenn sich der Kugelzapfen im Gehäuse bewegt, kippt dieser abgeflachte Bereich hin und her. Ändert sich der Kippwinkel zwischen Kugelzapfen und Gehäuse, ändert sich auch dementsprechend die Entfernung zwischen Sensor und dem abgeflachten Bereich. Die Beziehung zwischen der Entfernung und dem Kippwinkel ergibt sich aus der geometrischen Anordnung des Sensors in Bezug auf eine Anordnung des abgeflachten Bereichs, die sich mittels einer parametrischen Bewegungsgleichung beschreiben lässt. Die Anordnung des Sensors ist teilweise durch die Stellung des Sensors in Bezug zum Gehäuse bestimmt. Diese Stellung kann so justiert werden, dass der funktionale Zusammenhang zwischen Entfernung und Kippwinkel nicht nur eindeutig ist, sondern auch im Wesentlichen linear.

Wie bereits zuvor erwähnt, bildet in einer bevorzugten Ausgestaltung des Kugelgelenks der abgeflachte Bereich eine gerade Ebene (die Krümmung im abgeflachten Bereich beträgt in diesem Fall null), wobei die Ebene um einen vorgegebenen Winkel in Bezug auf die axiale Richtung des Kugelzapfens verkippt ist, wobei der Winkel mehr oder weniger als 90 Grad beträgt. Die Ausgestaltung des abgeflachten Bereichs und die Anordnung des Sensors sind einander angepasst.

In einer Ausgestaltung des Kugelgelenks ist die Verkippung des abgeflachten Bereichs so vorgegeben, dass eine injektive Abbildung zwischen dem Kippwinkel und der zu erfassenden Entfernung entsteht. Somit, wenn der abgeflachten Bereich gegenüber der axialen Richtung verkippt ist, bspw. um 30 Grad, muss der Sensor entsprechend in Bezug auf das Gehäuse verkippt angeordnet werden, um eine eindeutige bzw. injektive Beziehung zwischen dem Kippwinkel, der zwischen dem Gehäuse und dem Kugelzapfen vorhanden ist, und der Entfernung, die zwischen dem Sensor und dem abgeflachten Bereich vorhanden ist, herzustellen.

In einer Ausgestaltung des Kugelgelenks erstreckt sich der abgeflachte Bereich im Wesentlichen orthogonal zu der axialen Richtung des Kugelzapfens. Somit bildet der abgeflachte Bereich im Wesentlichen eine kreisförmige Fläche. Die Herstellung des Kugelgelenks wird somit vereinfacht. Im Gegensatz hierzu wird im Stand der Technik beispielsweise in der DE1020130246 A1 die Oberfläche der Gelenkkugel mit aufwendigen Herstellungsverfahren verarbeitet. Oder in der DE10110738 wird beispielsweise ein Sackloch in der Gelenkkugel gebohrt, um magnetische Felderzeuger zu lagern. Der kreisförmige Oberflächenbereich der Gelenkkugel bringt somit wesentliche Vorteile bezüglich der Herstellungskosten mit sich.

In einer Ausgestaltung des Kugelgelenks bildet der abgeflachte Bereich eine gerade Ebene. Die Beziehung bzw. der Zusammenhang zwischen der Entfernung und dem Kippwinkel kann somit mit einer einfachen mathematischen Formel beschrieben werden. Es ist dann weiterhin möglich, einen einfachen Algorithmus zu verwenden, um den Kippwinkel anhand dieser Entfernung zu ermitteln. Der Fehlerbereich der Kippwinkelerfassung kann somit auch vermindert werden.

Bei dem zumindest einem Sensor handelt es sich um einen Sensor der auf Basis eines induktiven, kapazitiven und/oder optischen Messverfahrens verwendet wird, um die Entfernung zu erfassen. Ein Kugelgelenk für ein Fahrzeug kann sich regelmäßig in einem Einflussbereich eines externen magnetischen Feldes befinden. Ein Sensor, der auf Basis eines induktiven, kapazitiven und/oder optischen Messverfahrens arbeitet, hat den Vorteil, dass er von magnetischen Feldern nicht beeinflusst wird. Ein Kugelgelenk dieser Art ist daher störungsunempfindlich gegenüber magnetischen Einflüssen.

In einer alternativen Ausgestaltung des Kugelgelenks ist der zumindest eine Sensor symmetrisch in Bezug auf eine vorgegebene Schwenkachse des Kugelgelenks an der Wandung des Gehäuses angeordnet. In anderen Worten: Der Sensor ist mittig gegenüber der Schwenkachse an der Gehäusewandung montiert. Wenn der Kippwinkel bei Null Grad liegt, misst der Sensor die Entfernung zu einem von der Mitte des abgeflachten Bereiches abweichenden Punkt an der Oberfläche des abgeflachten Bereichs. Wenn der Kugelzapfen in eine Schwenkrichtung kippt, kippt sich der abgeflachte Bereich in Bezug auf den Sensor und die Entfernung zwischen Sensor und abgeflachten Bereich ändert sich. Daten, insb. Messwerte, die der erfassten Entfernung entsprechen, werden von dem Sensor an eine Auswerteeinheit zur weiteren Verarbeitung übertragen. Die Auswerteeinheit ist dazu ausgelegt, den Kippwinkel mittels eines Algorithmus zu ermitteln, wobei der Algorithmus anhand des Zusammenhangs zwischen Entfernung und Kippwinkel aufgestellt wird.

In der erfindungsgemäßen Ausgestaltung des Kugelgelenks ist der zumindest eine Sensor asymmetrisch in Bezug auf eine vorgegebene Schwenkachse des Kugelgelenks an der Wandung des Gehäuses angeordnet, so dass der Sensor, wenn der Kippwinkel zwischen dem Gehäuse und der Kugelzapfen Null Grad ist, die Entfernung gegenüber einem Mittelpunkt des abgeflachten Bereichs erfasst. Der Sensor ist mit anderen Worten außermittig positioniert und so gerichtet, dass die Messrichtung des Sensors in Richtung des Zentrums des Gehäuses zeigt.

In einer Ausgestaltung des Kugelgelenks sind mindestens zwei Sensoren an der Wandung des Gehäuses angeordnet, wobei die mindestens zwei Sensoren dazu dienen, den Kippwinkel zwischen dem Kugelzapfen und dem Gehäuse bezogen auf zwei voneinander unterschiedliche Schwenkrichtungen zu erfassen. Dadurch, dass der Kugelzapfen, abgesehen von einer Rotationsbewegung um seine axiale Richtung, nur zwei Freiheitsgrade in Bezug auf das Gehäuse aufweist, ermöglicht die Erfassung des Kippwinkels in zwei voneinander unterschiedlichen Schwenkrichtungen eine vollständige Aufzeichnung der Stellung des Kugelgelenks.

In einer Ausgestaltung des Kugelgelenks weist das Kugelgelenk eine Auswerteeinheit auf, die dazu dient den Kippwinkel anhand der erfassten Entfernung entsprechenden Entfernungswerte zu ermitteln.

Die Aufgabe der Erfindung kann weiterhin gelöst werden durch eine Vorrichtung umfassend eine Auswerteeinheit und ein Kugelgelenk, wobei die Vorrichtung einen Kommunikationspfad aufweist, der die Auswerteeinheit und das Kugelgelenk verbindet, und wobei die Auswerteeinheit dazu dient, den Kippwinkel anhand eines der erfassten Entfernung entsprechenden Entfernungswerts zu ermitteln.

Die Erfindung wird anhand der folgenden Figuren näher erläutert. Darin zeigt:

Fig. 1: eine schematische Darstellung einer Ausführungsform eines Kugelgelenks;

Fig. 2a, b eine vereinfachte Schnittdarstellung des Kugelzapfens des in Fig. 1a gezeigten Kugelgelenks, sowie eine grafische Darstellung der Beziehung zwischen Entfernung und Kippwinkel des in Fig. 1 gezeigten Kugelgelenks;

Fig. 3a, b, c: eine perspektivische Ansicht, eine Draufsicht und eine seitliche Ansicht einer Anordnung einer Gelenkkugel mit zwei Entfernungssensoren.

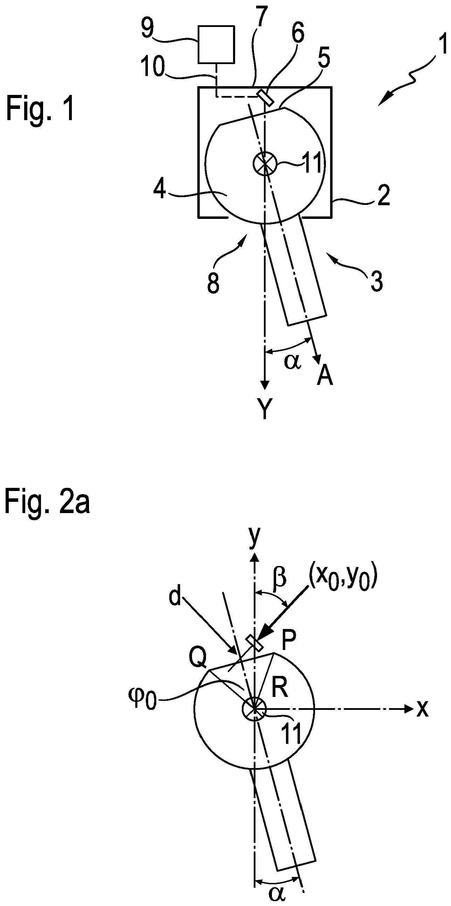

Fig. 1 zeigt ein Kugelgelenk 1 mit einem Gehäuse 2 und einem Kugelzapfen 3. Der Kugelzapfen 3 weist eine Gelenkkugel 4 auf, wobei die Gelenkkugel 4 einen abgeflachten Bereich 5 aufweist. Gegenüber von diesem abgeflachten Bereich 5 ist ein Sensor 6 an der Gehäusewandung 7 angeordnet. Der Sensor 6 ist ein Entfernungssensor. Der Kugelzapfen 3 erstreckt sich weiterhin in einer axialen Richtung A durch eine Öffnung 8 aus dem Gehäuse 2 hinaus. Ein positiver Kippwinkel $+\alpha$ zwischen dem Kugelzapfen 3 und dem Gehäuse 2 ist vorgesehen. Insbesondere bezeichnet der Kippwinkel $\alpha$ einen Winkel zwischen einer Achse Y des Gehäuses 2 und der Längsachse A des Kugelzapfens 3. Bei der Achse Y des Gehäuses handelt es sich um eine Achse, die identisch mit der Längsachse A des Kugelzapfens 3 ist, wenn sich der Kugelzapfen 3 in der Mitte seines Bewegungsbereichs befindet.

Der abgeflachte Bereich 5 erstreckt sich im Wesentlichen orthogonal zu der axialen Richtung A. Der Sensor 6 ist mittig an der Gehäusewandung 7 angeordnet. Der Sensor 6 ist gerichtet, um die Entfernung d in einer vorgegebenen Messrichtung zu erfassen. In Fig. 1 ist der Sensor 6 so gerichtet, dass die Messrichtung von der Achse Y des Gehäuses 2 abweicht. Ein Messwinkel $\beta$ ist zwischen der Messrichtung und der Achse Y des Gehäuses 2 vorhanden. Weiterhin ist der Sensor 6 mit einer Auswerteeinheit 9 mittels eines Kommunikationspfades 10 verbunden. Die Entfernung d wird von dem Sensor 6 erfasst. Der Sensor 6 erzeugt dabei Messwerte, die dann an die Auswerteeinheit 9 übertragen werden. Die Auswerteeinheit 9 ist ausgelegt, die Messwerte anhand eines Algorithmus zu verarbeiten. Der Algorithmus gestaltet sich nach einem Zusammenhang zwischen der Entfernung d und des Kippwinkels $\alpha$. Die Auswerteeinheit 9 ist also dazu ausgelegt, einen Kippwinkel $\alpha$ anhand eines Messwerts zu ermitteln.

Fig. 2a zeigt eine vereinfachte Schnittdarstellung des Kugelzapfens 3 des in Fig. 1a gezeigten Kugelgelenks 1. Ein zweidimensionales Koordinatensystem ist in der Schnittdarstellung eingeblendet. Der Ursprung (0, 0) des Koordinatensystems entspricht einer Schwenkachse 11 des Kugelgelenks. Die Y-Achse des Koordinatensystems entspricht der Achse Y des Gehäuses 2. Somit kann die Position des Sensors 6 in Bezug auf die Schwenkachse 11 definiert werden. Weiterhin ist die Messrichtung in Bezug auf die Y-Achse definiert. Wenn die Geometrie des Kugelzapfens 3 sowie die Position des Sensors 6 in Bezug auf den Kugelzapfen 3 bekannt sind, ist es möglich, mit der folgenden Formel eine allgemeine Beziehung zwischen erfasster Entfernung d und Kippwinkel $\alpha$ des Kugelzapfens 3 zu ermitteln.

$$d = \frac{-R\,\cos\varphi_0 + y_0\cos\alpha + x_0\sin\alpha}{\cos(\beta - \alpha)}$$

wobei d der erfassten Entfernung;
R dem Radius der Gelenkkugel;
$\alpha$ dem Kippwinkel;
$\beta$ dem Messwinkel;
$x_0$ und $y_0$ der Position des Sensors; und
$\varphi_0$ dem Winkel zwischen Q und P entsprechen.

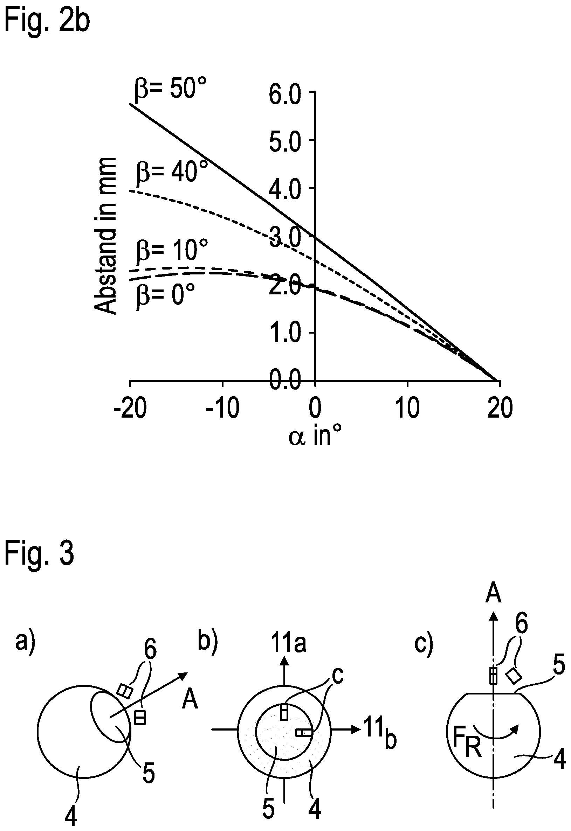

In Fig. 2b ist eine graphische Darstellung der Beziehung zwischen Entfernung d und Kippwinkel $\alpha$ für ein Kugelgelenk 1, in dem der Sensor 6 asymmetrisch angeordnet ist, gezeigt. In Fig. 2b sind vier unterschiedliche Kennlinien dargestellt. Die Kennlinien entsprechen verschiedenen Messrichtungen des Sensors 6. Das Verhältnis zwischen Kippwinkel $\alpha$ und Abstand d ist für alle vier Kennlinien eindeutig. Es ist aber erkennbar, dass wenn der Messwinkel $\beta$ des Sensors 6 in Bezug auf die Y-Achse erhöht wird, d.h. wenn $\beta$ größer wird, dieses Verhältnis bzw. der Zusammenhang zwischen Abstand d und Kippwinkel $\alpha$ einem linearen Verhältnis immer näher kommt. Insbesondere bei einem Messwinkel von 50 Grad ($\beta$ = 50°) ist der Zusammenhang zwischen Kippwinkel $\alpha$ und Abstand bzw. Entfernung d eine lineare funktionale Beziehung.

Fig. 3 zeigt eine perspektivische Ansicht einer Draufsicht und eine seitliche Ansicht einer Anordnung einer Gelenkkugel 4 mit zwei Entfernungssensoren 6. Im Prinzip ist es möglich, für eine vorgegebene Schwenkachse 11 eine eindeutige Erfassung des Kippwinkels $\alpha$ mit nur einem Sensor 6 durchzuführen. Mit zwei Sensoren 6 wie es in Fig. 3a gezeigt ist, ist es möglich, den Kippwinkel $\alpha$ in Bezug auf zwei verschiedene Schwenkachsen 11a, 11b zu erfassen. Ein Kugelgelenk 1 hat an sich drei verschiedene Freiheitsgrade. Wenn der abgeflachte Bereich 5 der Gelenkkugel 4 im Wesentlichen orthogonal zu der Lenksachse A des Kugelzapfens 3 angeordnet ist, verliert der Rotationsfreiheitsgrad $F_R$ des Kugelgelenks 1 an Bedeutung. Die Erfassung der Kippwinkel $\alpha$ in zwei verschiedenen Schwenkrichtungen ermöglicht somit eine vollständige Aufzeichnung des Kippwinkels $\alpha$.

Fig. 3b ist eine Draufsicht der in Fig. 3a gezeigten Sensoren 6 und Gelenkkugel 4. Hier ist zu erkennen, dass die zwei Sensoren 6 den Kippwinkel $\alpha$ des Kugelzapfens 3 in Bezug auf das Gehäuse 2 in zwei Schwenkrichtungen 11a, 11b, die im Wesentlichen senkrecht zueinander angeordnet sind, erfassen. Die Auswertung der von den Sensoren 6 erfassten Messwerte wird somit vereinfacht. Es ist aber auch denkbar, dass die Schwenkrichtungen nicht senkrecht zueinander sind, sondern um einen vorgegebenen Grad voneinander abweichen, beispielsweise um 45 Grad. Wenn die Sensoren 6 so angeordnet sind, ist es ebenfalls möglich, eine vollständige Aufzeichnung der Kippwinkel $\alpha$ zu ermitteln.

In Fig. 3c ist eine seitliche Ansicht gezeigt. Wie in den Fig. 3a und 3b ist zu erkennen, dass die Sensoren 6 asymmetrisch bzw. außermittig angeordnet sind. Die Sensoren werden so positioniert und gerichtet, dass eine lineare Beziehung zwischen Kippwinkel $\alpha$ und erfasster Entfernung d entsteht.

Bezugszeichen

| 1  | Kugelgelenk |
|----|-------------|
| 2  | Gehäuse |
| 3  | Kugelzapfen |
| 4  | Gelenkkugel |
| 5  | abgeflachter Bereich |
| 6  | Sensor |
| 7  | Gehäusewandung |
| 8  | Öffnung des Gehäuses |
| 9  | Auswerteeinheit |
| 10 | Kommunikationspfad |
| 11 | Schwenkachse |
| A  | axiale Richtung bzw. Langsachse |
| $\alpha$ | Kippwinkel |
| $\beta$ | Messwinkel |
| d  | Entfernung |

**Patentansprüche**

1. Kugelgelenk (1) für ein Fahrzeug, mit einem Gehäuse (2) und einem sich in einer axialen Richtung (A) erstreckenden und eine Gelenkkugel (4) umfassenden Kugelzapfen (3), der mit seiner Gelenkkugel (4) schwenkbeweglich in dem Gehäuse (2) gelagert ist und sich durch eine Öffnung (8) des Gehäuses (2) hinaus erstreckt, wobei die Gelenkkugel (4) einen abgeflachten Bereich (5) aufweist, und zumindest einem Sensor (6), der dazu dient, einen Kippwinkel ($\alpha$) zwischen dem Kugelzapfen (3) und dem Gehäuse (2) zu erfassen,
**dadurch gekennzeichnet, dass**

- der zumindest eine Sensor (6) ein Entfernungssensor ist, der an einer Wandung (7) des Gehäuses (2) angeordnet ist und dem abgeflachten Bereich (5) der Gelenkkugel (4) gegenüberliegt, und wobei der zumindest eine Sensor (6) so ausgerichtet ist, dass der Sensor (6) mit einer vorgegebenen Messrichtung eine Entfernung (d) gegenüber dem abgeflachten Bereich (5) erfasst, um daraus auf den Kippwinkel ($\alpha$) zu schließen, wobei die Messrichtung so gestaltet ist, dass eine injektive Abbildung zwischen dem Kippwinkel ($\alpha$) und der zu erfassenden Entfernung (d) entsteht, und

- der zumindest eine Sensor (6) asymmetrisch in Bezug auf eine vorgegebene Schwenkachse (11) des Kugelgelenks (1) an der Wandung (7) des Gehäuses (2) angeordnet ist, so dass der Sensor (6), wenn der Kippwinkel (α) zwischen dem Gehäuse (2) und dem Kugelzapfen (3) Null Grad ist, die Entfernung (d) gegenüber einem Mittelpunkt des abgeflachten Bereichs (5) erfasst.

2. Kugelgelenk (1) nach Anspruch 1, **dadurch gekennzeichnet, dass** es sich bei der injektiven Abbildung um eine lineare funktionale Beziehung handelt.

3. Kugelgelenk (1) nach Anspruch 1 oder 2, **dadurch gekennzeichnet, dass** der abgeflachte Bereich (5) sich im Wesentlichen in einer Ebene erstreckt, wobei die Ebene um einen vorgegebenen Winkel in Bezug auf die axiale Richtung (A) des Kugelzapfens (3) verkippt ist.

4. Kugelgelenk (1) nach Anspruch 3, **dadurch gekennzeichnet, dass** die Verkippung des abgeflachten Bereichs (5) so vorgegeben ist, dass eine injektive Abbildung zwischen dem Kippwinkel (α) und der zu erfassenden Entfernung (d) entsteht.

5. Kugelgelenk (1) nach zumindest einem der vorhergehenden Ansprüche, **dadurch gekennzeichnet, dass** der abgeflachte Bereich (5) sich im Wesentlichen orthogonal zu der axialen Richtung (A) des Kugelzapfens (3) erstreckt.

6. Kugelgelenk (1) nach zumindest einem der vorhergehenden Ansprüche, **dadurch gekennzeichnet, dass** der abgeflachte Bereich (5) eine gerade Ebene bildet.

7. Kugelgelenk (1) nach zumindest einem der vorhergehenden Ansprüche, **dadurch gekennzeichnet, dass** der abgeflachte Bereich (5) im Wesentlichen eine kreisförmige Fläche bildet.

8. Kugelgelenk (1) nach zumindest einem der vorhergehenden Ansprüche, **dadurch gekennzeichnet, dass** der zumindest eine Sensor (6) auf Basis eines induktiven, kapazitiven und/oder optischen Messverfahrens die Entfernung (d) erfasst.

9. Kugelgelenk (1) nach zumindest einem der vorhergehenden Ansprüche, **dadurch gekennzeichnet, dass** mindestens zwei Sensoren (6) an der Wandung (7) des Gehäuses (2) angeordnet sind, wobei die mindestens zwei Sensoren (6) dazu dienen, den Kippwinkel (α) zwischen dem Kugelzapfen (3) und dem Gehäuse (2) bezogen auf zwei voneinander unterschiedliche Schwenkrichtungen zu erfassen.

10. Kugelgelenk (1) nach zumindest einem der vorhergehenden Ansprüche, **dadurch gekennzeichnet,**

**dass** das Kugelgelenk (1) eine Auswerteeinheit (9) aufweist, die dazu dient, den Kippwinkel (α) anhand eines der erfassten Entfernung (d) entsprechenden Entfernungswerts zu ermitteln.

11. Vorrichtung umfassend eine Auswerteeinheit (9) und ein Kugelgelenk (1) nach zumindest einem der Ansprüche 1 bis 8, **dadurch gekennzeichnet, dass** die Vorrichtung einen Kommunikationspfad (10) aufweist, der die Auswerteeinheit (9) und das Kugelgelenk (1) verbindet, und dass die Auswerteeinheit (9) dazu dient den Kippwinkel (α) anhand eines der erfassten Entfernung (d) entsprechenden Entfernungswerts zu ermitteln.

**Claims**

1. Ball joint (1) for a vehicle, having a housing (2) and a ball stud (3) which extends in an axial direction (A), comprises a joint ball (4), is mounted in a pivotably movable fashion in the housing (2) with its joint ball (4) and extends through an opening (8) in the housing (2), wherein the joint ball (4) has a flattened region (5), and having at least one sensor (6) which serves to sense a tilt angle (α) between the ball stud (3) and the housing (2), **characterized in that**

   - the at least one sensor (6) is a distance sensor which is arranged on a wall (7) of the housing (2) and lies opposite the flattened region (5) of the joint ball (4), and wherein the at least one sensor (6) is oriented in such a way that the sensor (6) senses, with a predefined measuring direction, a distance (d) with respect to the flattened region (5), in order to infer the tilt angle (α) therefrom, wherein the measuring direction is configured such that injective mapping between the tilt angle (α) and the distance (d) to be sensed is brought about, and
   - the at least one sensor (6) is arranged asymmetrically with respect to a predefined pivoting axis (11) of the ball joint (1) on the wall (7) of the housing (2), so that, if the tilt angle (α) between the housing (2) and the ball stud (3) is zero degrees, the sensor (6) senses the distance (d) with respect to a centre point of the flattened region (5).

2. Ball joint (1) according to Claim 1, **characterized in that** the injective mapping is a linear functional relationship.

3. Ball joint (1) according to Claim 1 or 2, **characterized in that** the flattened region (5) extends essentially in a plane, wherein the plane is tilted by a predefined angle with respect to the axial direction (A) of the ball stud (3).

**4.** Ball joint (1) according to Claim 3, **characterized in that** the tilting of the flattened region (5) is predefined in such a way that injective mapping between the tilt angle (α) and the distance (d) to be sensed is brought about.

**5.** Ball joint (1) according to at least one of the preceding claims, **characterized in that** the flattened region (5) extends essentially orthogonally with respect to the axial direction (A) of the ball stud (3).

**6.** Ball joint (1) according to at least one of the preceding claims, **characterized in that** the flattened region (5) forms a flat plane.

**7.** Ball joint (1) according to at least one of the preceding claims, **characterized in that** the flattened region (5) forms essentially a circular surface.

**8.** Ball joint (1) according to at least one of the preceding claims, **characterized in that** the at least one sensor (6) senses the distance (d) on the basis of an inductive, capacitive and/or optical measuring method.

**9.** Ball joint (1) according to at least one of the preceding claims, **characterized in that** at least two sensors (6) are arranged on the wall (7) of the housing (2), wherein the at least two sensors (6) serve to sense the tilt angle (α) between the ball stud (3) and the housing (2) in relation to two pivoting directions which are different from one another.

**10.** Ball joint (1) according to at least one of the preceding claims, **characterized in that** the ball joint (1) has an evaluation unit (9) which serves to determine the tilt angle (α) on the basis of a distance value which corresponds to the sensed distance (d).

**11.** Device comprising an evaluation unit (9) and a ball joint (1) according to at least one of Claims 1 to 8, **characterized in that** the device has a communication path (10) which connects the evaluation unit (9) and the ball joint (1), and **in that** the evaluation unit (9) serves to determine the tilt angle (α) on the basis of a distance value which corresponds to the sensed distance (d).

**Revendications**

**1.** Joint à rotule (1) pour un véhicule, comprenant un boîtier (2) et un tourillon à rotule (3) s'étendant dans une direction axiale (A) et comportant une rotule d'articulation (4), lequel tourillon à rotule est monté à l'aide de sa rotule d'articulation (4) de manière mobile en pivotement dans le boîtier (2) et s'étend à travers une ouverture (8) du boîtier (2), dans lequel la rotule d'articulation (4) comprend une zone aplatie (5), et au moins un capteur (6) qui sert à détecter un angle d'inclinaison (α) entre le tourillon à rotule (3) et le boîtier (2),
**caractérisé en ce que**

- ledit au moins un capteur (6) est un capteur de distance qui est disposé sur une paroi (7) du boîtier (2) et est en regard de la zone aplatie (5) de la rotule d'articulation (4), et ledit au moins un capteur (6) étant orienté de telle sorte que le capteur (6) détecte, dans une direction de mesure prédéfinie, une distance (d) par rapport à la zone aplatie (5), afin d'en déduire l'angle d'inclinaison (α), la direction de mesure étant configurée de telle sorte qu'une application injective entre l'angle d'inclinaison (α) et la distance (d) à détecter soit produite et
- ledit au moins un capteur (6) est disposé sur la paroi (7) du boîtier (2) de manière asymétrique par rapport à un axe de pivotement (11) prédéfini du joint à rotule (1), de telle sorte que le capteur (6) détecte la distance (d) par rapport à un centre de la zone aplatie (5) lorsque l'angle d'inclinaison (α) entre le boîtier (2) et le tourillon à rotule (3) est de zéro degré.

**2.** Joint à rotule (1) selon la revendication 1, **caractérisé en ce que** l'application injective est une relation fonctionnelle linéaire.

**3.** Joint à rotule (1) selon la revendication 1 ou 2, **caractérisé en ce que** la zone aplatie (5) s'étend sensiblement dans un plan, le plan étant incliné d'un angle prédéfini par rapport à la direction axiale (A) du tourillon à rotule (3).

**4.** Joint à rotule (1) selon la revendication 3, **caractérisé en ce que** l'inclinaison de la zone aplatie (5) est prédéfinie de telle sorte qu'une application injective entre l'angle d'inclinaison (α) et la distance (d) à détecter soit produite.

**5.** Joint à rotule (1) selon au moins l'une des revendications précédentes, **caractérisé en ce que** la zone aplatie (5) s'étend de manière sensiblement orthogonale à la direction axiale (A) du tourillon à rotule (3).

**6.** Joint à rotule (1) selon au moins l'une des revendications précédentes, **caractérisé en ce que** la zone aplatie (5) forme un plan rectiligne.

**7.** Joint à rotule (1) selon au moins l'une des revendications précédentes, **caractérisé en ce que** la zone aplatie (5) forme sensiblement une surface circulaire.

**8.** Joint à rotule (1) selon au moins l'une des revendications précédentes, **caractérisé en ce que** ledit au moins un capteur (6) détecte la distance (d) sur la base d'un procédé de mesure inductif, capacitif et/ou optique.

**9.** Joint à rotule (1) selon au moins l'une des revendications précédentes, **caractérisé en ce qu'**au moins deux capteurs (6) sont disposés sur la paroi (7) du boîtier (2), lesdits au moins deux capteurs (6) servant à détecter l'angle d'inclinaison ($\alpha$) entre le tourillon à rotule (3) et le boîtier (2) par rapport à deux directions de pivotement différentes l'une de l'autre.

**10.** Joint à rotule (1) selon au moins l'une des revendications précédentes, **caractérisé en ce que** le joint à rotule (1) comprend une unité d'évaluation (9) qui sert à déterminer l'angle d'inclinaison ($\alpha$) sur la base d'une valeur de distance correspondant à la distance (d) détectée.

**11.** Dispositif comportant une unité d'évaluation (9) et un joint à rotule (1) selon au moins l'une des revendications 1 à 8, **caractérisé en ce que** le dispositif comprend une voie de communication (10) qui relie l'unité d'évaluation (9) et le joint à rotule (1), et **en ce que** l'unité d'évaluation (9) sert à déterminer l'angle d'inclinaison ($\alpha$) sur la base d'une valeur de distance correspondant à la distance (d) détectée.

# Fig. 1

# Fig. 2a

## Fig. 2b

## Fig. 3

**IN DER BESCHREIBUNG AUFGEFÜHRTE DOKUMENTE**

**In der Beschreibung aufgeführte Patentdokumente**

- DE 10350640 B4
- DE 102010052885 A1
- DE 102010030246 A1
- DE 102008041050 A1
- DE 10339126 A1
- DE 1020130246 A1
- DE 10110738